# EUROPEAN PATENT APPLICATION

(11) **EP 3 876 525 A1**
(43) Date of publication of application: **08.09.2021**
(21) Application number: 20891078.6
(22) Date of filing: 23.09.2020
(51) Int. Cl.: H04N 5/74, H04N 5/262

(54) **SYSTEM FOR RECORDING AND DELIVERING MULTIMEDIA PRESENTATIONS**

(30) Priority: 21.11.2019 RU 2019137537
(71) Applicant: Obshchestvo S Ogranichennoy Otvetstvennostyu "Laboratoriya Tsifra" (OOO "Tsifralab"), Moscow, 127473 (RU)
(72) Inventor: VYALYKH, Konstantin Mikhailovich, Moscow, 121433 (RU); KONSTANTINOV, Petr Alekseevich, Moscow, 115522 (RU); LOVYANNIKOV, Pavel Yurevich, Moscow, 121471 (RU); SHILOV, Anton Alekseevich, Vladimirskaya obl., 601435 (RU)
(74) Representative: Benatov, Samuil Gabriel
(86) International application number: PCT/RU2020/050243
(87) International publication number: WO 2021/101413

(57) **Abstract**

The invention relates to the field of computer technology, and particularly to a system for recording and producing multimedia presentations. The technical result of the invention consists in enhancing the functionality for generating multimedia content during the video recording of presentations. The technical result is achieved by using a system for recording and producing multimedia presentations, comprising:
- a video recording device configured to perform video recording to obtain a video stream;
- a sound system comprising at least one sound recording device and at least one sound output device;
- a server configured to:
- receive and process the video stream from the video recording device and an audio stream from the sound recording device;
- manage a presentation to ensure a process of dynamically overlaying multimedia objects on the presentation;
- output the processed video stream of the presentation or its segment on a main speaker's screen and at least one additional screen;
- store presentation data;

- a presentation background for the video recording of a speaker;
- a transparent touch board configured to transmit control signals to the server and installed opposite to the presentation background;
- the main speaker's screen configured to control the presentation via the server;
- the at least one additional speaker's screen configured to display the video stream of the presentation processed by the server.

## Description

### FIELD OF THE INVENTION

The invention relates to the field of computer technology, and particularly to a system for recording and producing multimedia presentations.

### BACKGROUND OF THE INVENTION

The prior art discloses the principles of implementing an in-studio process of recording content by using transparent light boards that allow a lecturer or other person carrying out a learning or presentation process to perform various actions with the aid of such boards. For example, these actions may consist of drawing additional objects, explanatory notes, as well as generating additional content that will be embedded in the presentation by recording a single video stream.

KR 101593136 B1 (Jong Min Kim, 11 Feb 2016) discloses a system for arranging lectures, which includes a transparent LED board, a computing module, a splitter, a camera, a background, a recording module, a sub-camera, a microphone, and a monitor. A recording process is performed using the LED board for drawing and the camera for recording, and subsequent image processing is used to generate a resulting image or start a live stream.

KR 20150092844 A (GIM HA JUN, 17 Aug 2015) discloses a recording system comprising a transparent board for implementing a drawing process in the course of lecture recording and computing modules for generating and sending a resulting video stream to a backend, thereby providing a live stream process.

RU 2494441 C1 (27 Sep 2013) discloses an interactive learning complex that comprises: a teacher's computer with an operating system and software, the teacher's computer having facilities for establishing a connection to an interactive board, and a multimedia projector of training materials, connected to the teacher's computer and configured to project multimedia data to the interactive board. The interactive learning complex is equipped with a projection screen as the interactive board and an infrared cone emitter. The infrared cone emitter is, in turn, equipped with an infrared light diode, by which a graphical interface cursor is moved in the plane of the projection screen in the form of a spot of variable size and variable intensity and with a web-camera having a narrowband infrared filter. The web-camera reads an emission spot of the cone emitter. The teacher's computer operating system executes control operations to provide the interaction of the infrared cone emitter with the web-camera and the projection screen.

The drawbacks of the above-described prior art solutions are their limited functionalities, particularly the lack of possibilities for creating dynamic multimedia content during the video recording process.

The present invention allows one to solve the technical problem of creating a new system for recording and producing multimedia presentations, which has enhanced functionality for managing and generating additional content during the video recording process.

The present invention's technical result consists in enhancing the functionality for generating multimedia content during the video recording of presentations.

The additional technical result of the present invention consists of increasing the efficiency of the process of producing presentations by enhancing the functionality for generating and managing additional information formed and overlaid onto the main presentation image.

The above technical results are achieved by a system for recording and producing multimedia presentations, which comprises:
a video recording device configured to perform video recording to obtain a video stream;
a sound system comprising at least one sound recording device and at least one sound output device;
a server configured to receive and process the video stream from the video recording device and an audio stream from the sound recording device; manage a presentation to ensure a process of dynamically overlaying multimedia objects on the presentation; output the processed video stream of the presentation or its segment on a main speaker's screen and at least one additional screen;
store presentation data;
a presentation background for the video recording of a speaker;
a transparent touch board configured to transmit control signals to the server and installed opposite to the presentation background;
the main speaker's screen configured to control the presentation via the server;
the at least one additional speaker's screen configured to display the video stream of the presentation processed by the server.

In one embodiment, the system further comprises a projection background and a speaker's projector, which is configured to output the processed video stream of the presentation and the overlaid multimedia content to the projection background.

In another embodiment, the system further comprises a video signal splitter configured to output a final processed image simultaneously to one or more data display devices.

In another embodiment, the touch board further comprises a rear projection film.

In another embodiment, the system comprises a touch board projector configured to display a presentation segment on the touch board.

In another embodiment, the touch board further comprises at least one light source.

In another embodiment, the light source comprises a LED strip.

In another embodiment, the server is configured to transmit the presentation's processed video stream to a remote broadcasting server.

In another embodiment, the server is configured to store the recorded video stream of the presentation.

In another embodiment, the system further comprises a teleprompter platform.

In another embodiment, an image displayed on one or more of the speaker's screens comprises additional graphical information.

### BRIEF DESCRIPTION OF THE DRAWINGS

FIG. 1 and FIG. 2 show a schematic view of a system according to the present invention.

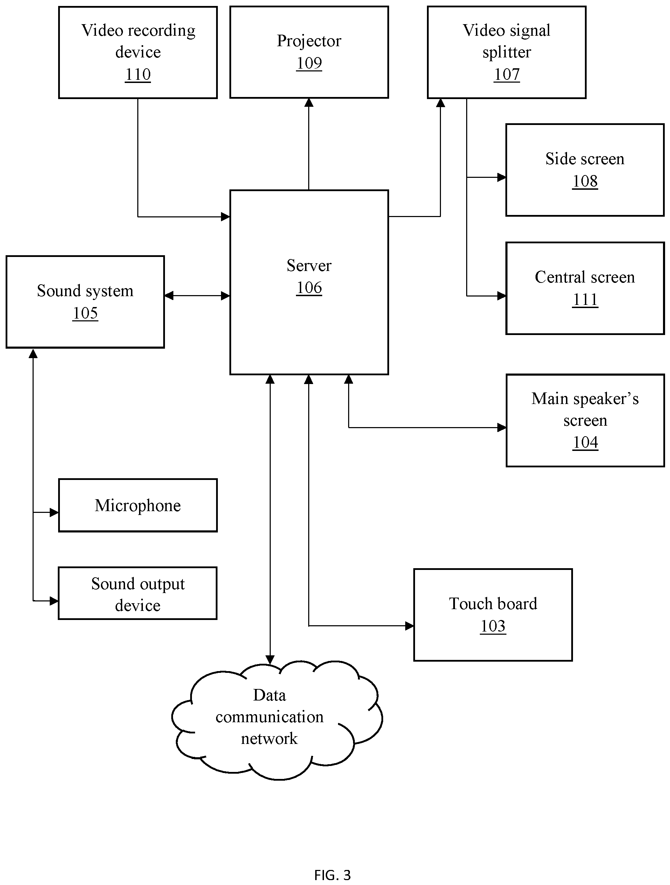

FIG. 3 shows an interaction diagram of system elements.

### DETAILED DESCRIPTION OF THE INVENTION

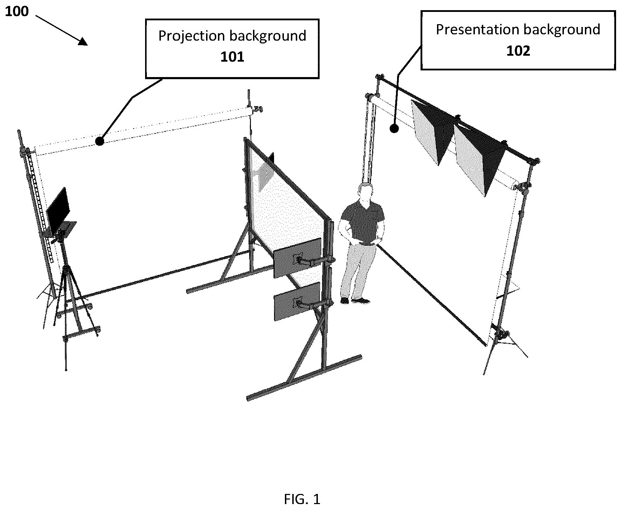

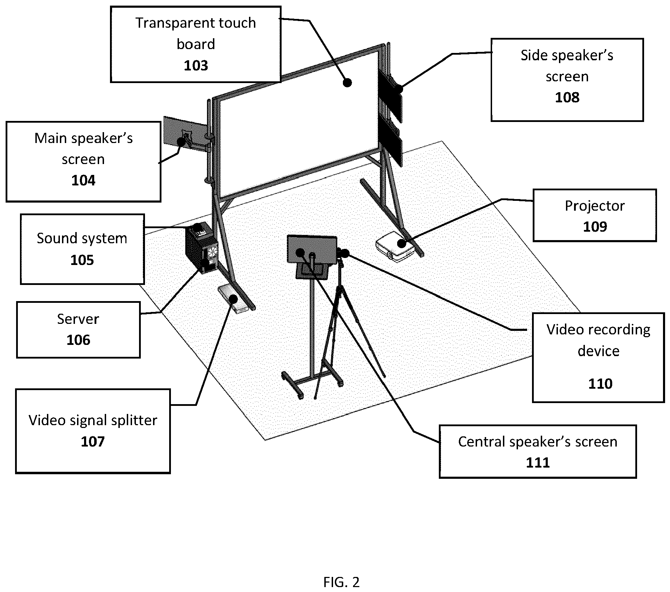

As shown in FIG. 1 and FIG. 2, a system (100) for recording and producing multimedia presentations comprises the following elements: a projection background (101), a presentation background (102), a transparent touch board (103), a main speaker's screen (104), a side speaker's screen (108), a central speaker's screen (111), a sound system (105), a server (106), a video signal splitter (107), a projector (109), and a video recording device (110).

The system's hardware-software complex (100) forms a video studio for video recording and streaming, including the recording of interactive video for online training courses.

Speaker performance is recorded against the presentation background (102) using one or more video cameras (110). Audio (the sound from the speaker's speech) is recorded using a microphone included in the sound system (105). The recorded video stream and sound are sent to the server (106), where elements (slides) of the presentation itself are overlaid on the video stream from the camera (110). The actions of moving objects on a current slide, writing a text, and drawing other graphic objects are performed by reading touches from the touch board (103). A signal resulted from the interaction of a speaker with the board (103) goes to the server (106) and is processed in specialized software.

A recorded and compiled video stream is stored by the server (106) to a built-in or external storage device, for example, a hard disk or cloud storage, and/or is sent to a broadcasting server to which viewers are connected to.

Being recorded by using the video recording device (110), the video stream with additional auxiliary information for the speaker is displayed on the speaker's screens (108) and (111), as well as the projection background (101).

The video signal splitter (107) allows an image to be displayed simultaneously on different data display devices, for example, monitors. However, the use of this device (107) is optional and is caused by the need to split a video signal. The server (106) may also fulfill the function of broadcasting the video signal, provided that it has a required number of connection ports. By so doing, the speaker sees himself/herself and elements virtually surrounding him/her on the projection background (101) and the side and central speaker's screens (108), (111), which allows the speaker to interact with the objects of the presentation and understand, during the recording process, what is displayed on the resulting video.

The video recording device (110) included in the system (100) is installed approximately at the level of the speaker's eyes at some distance from the touch board (103), through the glass of which the presentation is directly recorded. Furthermore, the video recording device (110) should be arranged such that no glare from the glass of the board (103) and the central speaker's screen (111) (or a teleprompter glass) falls into the recording device's lens (110). To do this, it is necessary to slightly move the video recording device (110) to the left or to the right relative to the center of the board (103).

Black shields, the location of which may vary, may be used to prevent the occurrence of other glare (for example, from sources of direct or reflected light). One of the shields may be opposite to the projection background (101) to prevent the glare from the glass of the board from hitting the lens.

The transparent touch board (103) is a board having transparent glass, which is used for managing a presentation. With its help, one may carry out the following manipulations: draw, erase, move and scale objects, hide and make the objects visible, convert notes to a static image, and perform other actions. Moreover, while working with the presentation, one may use the following active elements: "map" providing the possibility of moving and zooming, "text" providing the possibility of vertical scrolling, "browser" (a built-in web-browser that supports touch control), and others. The touch board (103) is configured to handle at least three simultaneous touches.

During the video recording process, the speaker may interact with the presentation using a presenter or touching the touch board (103). An algorithm for handling touches and calling the functionality of a graphical interface of the board (103) has different predefined features. For example, to invoke a visual control panel, it is required to touch the board (103) with at least three fingers at the same time and then select the desired tool to interact with the presentation. The control panel is displayed on the speaker's screens and comprises virtual buttons that allow one to start or stop recording, select a tool for drawing and removing notes, interacting with the active elements, and the like. The selected tool may be used with one finger or an empty marker. It is possible to use a "flick" motion to navigate between slides by moving two fingers to the left and to the right on the touch board.

The server software (SW) determines the area of an object that touches the touch board (103) and, depending on the area, selects a necessary tool for working with a presentation slide. If there is an object that occupies more than 0.25% of the area of the entire frame, then the SW recognizes the object as a sponge (eraser) and erases what was drawn. To erase what is written, it is possible to use a regular sponge for whiteboards and for the convenience of writing - an empty pump marker. The thickness of the marker should be selected in accordance with the sensitivity of the touch board (103).

The image from the video recording device (110) is sent to the server (106) and, using the SW, is compared with coordinates of the working area of the touch board (103). The coordinates are obtained from the interaction of the speaker with the touch board (103) such that the touch of the board (103) coincides with the place in the video where the speaker has touched the surface of the board (103), thereby making it possible to form the illusion that the speaker is making notes on the video.

The server (106) provides the execution of the main program logic, which ensures the implementation of an interactive process for generating multimedia content while conducting presentations and related educational or other processes. The main functions of the server (106) consist in receiving and processing a video stream from a video recording device in the form of one or more video cameras included in the video recording device (110), receiving an audio stream from a sound recording device, for example, a microphone or an array of microphones included in the sound system (105).

The server (106) may be implemented based on known computer devices, for example, a personal computer, server cluster, mainframe, and the like. In the general case, the server (106) comprises one or more processors for performing desired computing functions, random access memory, one or more data storage devices (HDD, SSD, etc.), interfaces and information input/output devices, a network exchange device (Ethernet, LAN, WLAN, and the like).

The server (106) is used to control the presentation to dynamically overlay multimedia objects on the presentation by using the transparent touch board (103). By using the SW of the server (106), the speaker may, during the recording process, interact (move, hide, show, delete, overlay, etc.) with the active objects on a prepared presentation in real-time, in particular, on its currently displayed slide. For example, the speaker may write and draw in the direction familiar to him/her, navigate between slides while he/she is being recorded.

In the general embodiment of the system (100), the server (106) allows one to implement the following functionalities:
transmitting a video stream by using a webcam software emulation;
overlaying a presentation on video in real-time;
overlaying semitransparent images;
writing and erasing by means of gestures when the speaker touches the touch board (103); overlaying what is written on the touch board (103) on the video in real-time;
switching tools for working with the presentation by means of gestures when the speaker touches the touch board (103) and/or by using the presenter;
the following active objects to a presentation slide: graphics, a browser, a map, a list, and the like; providing an animated slide change and providing the appearance/disappearance of a presentation object;
manipulating presentation objects (resizing, moving, hiding, and showing);
broadcasting a generated presentation stream over a data network, for example, the Internet.

The speaker's screens are a set of monitors (104), (108), (111), and projectors that allow different-purpose video streams to be displayed for viewing by the speaker during his/her performance. This equipment allows the speaker to see himself/herself, the presentation, and the notes made on the touch board (103) in real-time, and to adapt his/her movements in the frame, as well as to control the quality of video recording.

The main speaker's screen (104) is configured to control the server (106) and its software. The side speaker's screen (108) is used to display the generated (processed) video stream of the presentation. Additionally, it is also possible to arrange multiple monitors, for example, below and above the speaker's eye-level, to distribute the areas of interaction between the speaker and the board (103). For example, in the case of writing information on the board (103), the speaker will look at an upper monitor if an image is above his/her hands and at a lower monitor if the image is located lower than his/her hands. The fasteners of the screens are implemented as supporting brackets and allow adjusting the position of the monitors in height and tilt relative to the surface of the board (103). If the speaker is not at the side of the board (103) opposite to the installation side of the side speaker's screen (104) during the video recording process, it is possible to modify the system (100) such that it is without the side speaker's screen (104). This limitation is caused by the fact that the speaker's gaze will be directed not at the video recording device (110) and not at the objects of the presentation but to the side, which will adversely impact the resulting record.

The central speaker's screen (111) may be implemented as a monitor for transmitting the generated (processed) video stream of the presentation and for displaying an auxiliary text against the background of this stream in case of using a teleprompter system. When looking at this screen (111), the speaker looks directly at the video recording device (110), i.e. "at the audience ". If the central monitor is used without the teleprompter, the central monitor is positioned between the video recording device (110) and the projection background (101) to prevent the occurrence of glare and to cause the speaker gaze to fall into the center of the lens of the video recording device (110) more accurately.

The teleprompter platform is a necessary element for video studios that provide a teleprompter kit. This element is a height-adjustable stand having a monitor fastener and a translucent mirror on which an image is projected. A mandatory requirement for this element is to support the size of the installed center speaker's screen (111).

The sound system (105) provides accompanying sound for the presentation, allowing the sound to be recorded and reproduced. The sound system may include:
a radio system having a microphone - it is a professional in-studio audio equipment for recording a speaker's voice with a minimum amount of ambient noise and distortion. The microphone is attached to the speaker; a signal is fed to the transmitter. With the aid of a radio signal, the sound is fed to a receiver and then to the server (106);
an audio output device - it is used to reproduce audio when playing audio or video with sound, as well as to reproduce a sound signal from a remote audience (for arranging online conferences and broadcasts). This device may be represented by a speakerphone or a wireless earpiece. The type of the device depends on the characteristics of signal transmission quality in a particular room (a noise level and other factors).

One of the peculiarities of using the complex is the possibility of creating the illusion that the speaker's gaze focuses on a viewer or objects on the slide. For achieving this effect, the video studio components should be arranged and configured in a certain way. An important setting is an image distortion on the system of the screens arranged in front of the speaker. The interconnection of the entire complex allows one to achieve a natural and high-quality presentation of materials without having to apply additional efforts for post-processing video.

The system may also comprise a set of backgrounds and various types of illuminators for adjusting the illumination of the background and the speaker, in particular, a set of in-studio equipment that allows one to obtain a high-quality image, remove unnecessary shadows and avoid blurring the boundaries of the speaker's silhouette against the presentation background (102). The whole lighting is adjusted individually for specific room parameters. The presentation background (102) serves as the main presentation background when recording the speaker. The presentation background may be made as a lightbox (a light background is highlighted from the inside) or as several interchangeable backgrounds of different colors. In the latter case, these backgrounds are installed one by one on special racks.

The distance from the touch board (103) to the presentation background (102) depends on how the system (100) is modified when forming the studio environment. When using the presentation background (102), such as a lightbox, this distance should be at least 1 meter, and if a light is provided on the same side as the speaker, it is at least 2 meters.

The main conditions for determining the distance are as follows:
the absence of an image going beyond the presentation background (102) in the frame;
the position of the speaker relative to the background such that no shadow of the speaker is cast onto the background while leaving enough space for the speaker to move comfortably.

The system (100) may be equipped with the teleprompter platform, by which a semitransparent auxiliary text which is necessary for the speaker during the presentation is overlaid over the processed video stream. The image and text are displayed upside down because they are reflected off a teleprompter mirror. In this case, the video recording device (110) is installed behind the mirror, for which it is necessary to balance the transparency of the glass. The teleprompter platform is a necessary modifying element of the system (100) for video studios that provide a teleprompter kit. This component is a height-adjustable stand having a monitor fastener and a translucent mirror on which an image is projected. A mandatory requirement for this element is to support the monitor size of the installed center speaker's screen (111).

The projector (109) outputs the processed video stream of the presentation to the projection background (101), which allows the speaker to see the result of his/her performance more clearly. The exact location is selected individually based on the characteristics of a room. The image on the projection background (101) is required to create the illusion that the speaker is looking at the objects of the presentation in front of him/her at the moment when he/she is looking at this background. The background should be arranged on the same side as the video recording device (110), and the edge of the background should be as close as possible to the device (110) itself, for example, a video camera (or to the central speaker's screen (111) or a teleprompter frame).

The distortion of an image against the background (101) is provided by the software component of the system (100) and serves to help the speaker direct his/her gaze to the desired monitor. Only some part of the presentation image is displayed on this background (101). One example is shown below.

If the speaker is a right-hander and the projection background (101) is arranged to the right of the speaker, then:
the left side of the projection background (101) is arranged as close as possible to the video recording device (100);
when the speaker is positioned to the left of the final video, the entire image is shown against this background (101);
if the speaker is in the center, he/she can see, against this background (101), approximately 60% of the image (its left part is cropped and shifted to the video recording device (110));
if the speaker is on the right, he/she can see approximately 30% of the entire slide of the presentation on the background (101).

Due to the fact that the image is gradually hidden, the speaker falls into conditions under which it is convenient for him/her to look at certain monitors depending on his/her position, which allows him/her to control the direction of his/her gaze to some extent.

The projector (109) and the projection background (101) may be omitted or replaced with an appropriately sized screen.

It is necessary to deal with a key light and fill-in light to ensure that the system is well light up. As a rule, a key lighting is arranged at an angle of approximately 45 degrees from an illuminated object and is intended to provide contrast and a degree of detail in an image. Fill-in lighting shades the key light, resulting in a texturized shadow.

As part of the system (100), an LED strip arranged along the perimeter of the touch board (103) may be used. By customizing the LED strip, it is possible to create different types of lighting. In some embodiments, the LED strip may be replaced or supplemented with other light sources.

When the speaker is at the edge of the board (103), the light from a near-side lighting element (a LED strip) will serve as the key light, and all other elements will serve as the fill-in light. If the speaker is in a central position, then the light from both the lateral sides of the board will serve as the key light, while the light from the bottom and top sides will serve as the fill-in light. For speaker illumination, in addition to the LED strip, some supplementary lighting may be used in front of the board (103), particularly, two light sources are arranged from below, and two other light sources are arranged from above. In this case, the light on one of the sides of the touch board (103) provided with the LED strip should be turned off or closed. This side depends on the arrangement of the video recording device (110) relative to the touch board (103). If the video recording device

(110) is closer to the left edge, then the right side should be turned off, and vice versa. The supplementary lighting is configured to provide backlight and background light. Sets of such equipment are selected individually for a required room.

The system (100) may also be provided with equipment that allows the speaker to write a text exactly on a slide, draw a line, highlight an area when using the touch board (103). For this implementation, the touch board (103) is provided with the following components:
a rear projection film which is arranged on the outer side of the board (103) with respect to the speaker (from the side of the video recording device (110));
a touch-board projector for displaying a certain segment of a presentation slide on the rear projection film.

It is necessary to calibrate the touch board (103), the video recording device (110), and the touch-board projector to use the system (100) together with the rear projection film since all these elements should be configured to recognize the interaction of the speaker with a certain area of the film.

Given below is one example of the operation of a video studio during a recording and/or broadcasting process:
1. The video recording device (110) records the speaker against the presentation background (102) and transmits the resulting video stream to the server (106).
2. The sound system (105) receives sound from the speaker by using the microphone and transmits the sound to the server (106).
3. The video from the video recording device (110) and the sound from the sound system (105) are fed to the server (106), where the presentation is overlaid on the video stream received from the video recording device (110), and the sound is added to the processed video stream.
4. The actions of moving objects on a presentation slide, writing a text, and drawing other graphic objects are performed by reading touches on the transparent touch board (103). The signal goes to the server (106) and is processed in the software.
5. In case of using the embodiment with the rear projection film, the server (106) transmits the image to the touch-board projector that projects a segment of the presentation onto the film arranged on the part of the transparent touch board (103), in order to provide interaction with objects requiring line accuracy. In this case, the speaker sees the segment of the presentation on the transparent touch board (103).
6. The resulting (processed) video stream is stored on the server (106) and/or sent to the broadcasting server to which viewers are connected to.
7. The same video stream with additional auxiliary information for the speaker is displayed on the speaker's screens that are present in the video studio (for example, the speaker's screens (108), (111), and the projection background (101)). The video signal splitter (107) allows the image to be displayed on different monitors at the same time, but it is possible to use the system without the video signal splitter (107) if the server (106) has a sufficient number of connection ports. By using the speaker's screens which are part of the video studio, the speaker sees himself/herself and the elements virtually surrounding him/her, which allows the speaker to interact with the objects of the presentation and, during the recording process, understand what is displayed on the resulting video.

The above-given description of the present invention discloses only preferred embodiments but should also be interpreted as encompassing other embodiments which do not go beyond the scope of legal protection and which are obvious to those skilled in the art.

## Claims

1. A system for recording and producing multimedia presentations, comprising:
- a video recording device configured to perform video recording to obtain a video stream;
- a sound system comprising at least one sound recording device and at least one sound output device;
- a server configured to:
- receive and process the video stream from the video recording device and an audio stream from the sound recording device;
- manage a presentation to ensure a process of dynamically overlaying multimedia objects on the presentation;
- output the processed video stream of the presentation or its segment on a main speaker's screen and at least one additional screen;
- store presentation data;
- a presentation background for the video recording of a speaker;
- a transparent touch board configured to transmit control signals to the server and installed opposite to the presentation background;
- the main speaker's screen configured to control the presentation via the server;
- the at least one additional speaker's screen that is configured to display the video stream of the presentation processed by the server.

2. The system of claim 1, further comprising a projection background and a speaker's projector configured to output the processed video stream of the presentation and the overlaid multimedia content to the projection background.

3. The system of claim 1, further comprising a video signal splitter configured to output a final processed image simultaneously to one or more data display devices.

4. The system of claim 1, wherein the touch board further comprises a rear projection film.

5. The system of claim 4 further comprising a touch-board projector configured to display a segment of the presentation on the touch board.

6. The system of claim 1, wherein the touch board further comprises at least one light source.

7. The system of claim 6, wherein the light source comprises a LED strip.

8. The system of claim 1, wherein the server is configured to transmit the processed video stream of the presentation to a remote broadcasting server.

9. The system of claim 1, wherein the server is configured to store the recorded video stream of the presentation.

10. The system of claim 1 further comprising a teleprompter platform.

11. The system of claim 10, an image displayed on one or more of the speaker's screens comprises additional graphical information.
